# EUROPEAN PATENT APPLICATION

(11) **EP 4 773 402 A1**
(43) Date of publication of application: **08.07.2026**
(21) Application number: 25827332.5
(22) Date of filing: 17.06.2025
(51) Int. Cl.: H01M 50/507, H01M 50/519, H01M 50/521, H01R 25/14, H01M 50/502

(54) **BUS BAR BONDING PLATE FOR BATTERY MODULE AND BATTERY MODULE COMPRISING SAME**

(30) Priority: 24.06.2024 KR 20240081698; 16.06.2025 KR 20250078456
(71) Applicant: LG Energy Solution, Ltd., Seoul 07335 (KR)
(72) Inventor: SHIN, Jonghong, Daejeon 34122 (KR); PARK, Won Kyoung, Daejeon 34122 (KR); KIM, Gunryang, Daejeon 34122 (KR)
(74) Representative: Hoffmann Eitle
(86) International application number: PCT/KR2025/008322
(87) International publication number: WO 2026/005367

(57) **Abstract**

A busbar joint plate for a battery module according to an exemplary embodiment of the present invention is a busbar joint plate for a battery module, the busbar joint plate being coupled to a busbar for connecting the busbar and a circuit board, the busbar being provided for electrical connection of a plurality of battery cells in the battery module including the plurality of battery cells, the busbar joint plate including a busbar coupling portion coupled to the busbar; a board coupling portion connected to the circuit board; and a connection portion between the busbar coupling portion and the board coupling portion. The busbar joint plate and battery module according to an exemplary embodiment of the present invention can prevent damage to an FPCB through the busbar joint plate having a bent structure.

## Description

### [Technical Field]

The present invention relates to a battery module, and more specifically, to a busbar joint plate having a bent structure and a battery module in which damage to an FPCB is prevented through the busbar joint plate.

### [Background Art]

Secondary batteries refer to batteries that are chargeable and dischargeable, unlike primary batteries that are not chargeable, and are applied not only to portable devices but also to electric vehicles (EVs), hybrid electric vehicles (HEVs), and the like driven by electric drive sources.

Types of secondary batteries currently in widespread use include lithium-ion batteries, lithium polymer batteries, nickel-cadmium batteries, nickel-metal hydride batteries, nickel-zinc batteries, and the like. An operating voltage of such a unit secondary battery cell, i.e., a unit battery cell, is about 2.5 V to 4.6 V. Therefore, when a higher output voltage is required, a plurality of battery cells are connected in series to configure a battery pack. In addition, a plurality of battery cells may be connected in parallel to configure a battery pack according to the charge/discharge capacity required for a battery pack. Accordingly, the number of battery cells included in the battery pack may be set variously according to the required output voltage or charge/discharge capacity.

When configuring a battery pack by connecting a plurality of battery cells in series or in parallel, in general, a battery module including at least one battery cell, preferably a plurality of battery cells, is first configured, and then a battery pack is configured by adding other components while using the at least one battery module. Here, the battery module may refer to a component in which a plurality of battery cells are connected in series or in parallel, and the battery pack may refer to a component in which a plurality of battery modules are connected in series or in parallel to increase a capacity, an output, and the like.

The battery module is configured by electrically connecting a plurality of cells using a busbar, and electrode leads of the battery cells are connected to the busbar.

Then, such a busbar is connected to a circuit portion of a flexible printed circuit board (FPCB) of a busbar frame component within the module. In this case, the FPCB may be damaged by an impact during the module assembly process or during driving. If a crack occurs in the circuit portion of the FPCB, it may cause a serious problem in battery operation.

### [Invention]

### [Technical Problem]

The present invention has been made to solve the above-mentioned problems, and an object thereof is to provide a busbar joint plate having a bent structure for connecting a circuit portion of a flexible printed circuit board (FPCB) of a busbar frame component and a busbar, and a battery module capable of preventing damage to the FPCB through the busbar joint plate.

### [Technical Solution]

A busbar joint plate for a battery module according to an exemplary embodiment of the present invention is a busbar joint plate for a battery module, the busbar joint plate being coupled to a busbar for connecting the busbar and a circuit board, the busbar being provided for electrical connection of a plurality of battery cells in the battery module including the plurality of battery cells, the busbar joint plate including a busbar coupling portion coupled to the busbar; a board coupling portion connected to the circuit board; and a connection portion between the busbar coupling portion and the board coupling portion.

In addition, the busbar coupling portion, the board coupling portion, and the connection portion may be formed integrally.

In addition, the busbar joint plate is formed in a stepped shape.

In addition, the busbar coupling portion is arranged on an outer side of the battery module with respect to the board coupling portion.

In addition, the connection portion, with one end bent at the busbar coupling portion, extends inwardly of the battery module.

In addition, the board coupling portion, with one end bent at the connection portion, extends in a width direction of the battery module.

In addition, the busbar joint plate is made of the same material as the busbar.

The busbar coupling portion may be formed in a square shape.

The board coupling portion may have a rolled end portion.

A battery module according to an exemplary embodiment of the present invention includes: a battery cell stack in which a plurality of battery cells are stacked; a module case configured to accommodate the battery cell stack; a busbar configured to electrically connect the battery cells; a busbar frame on which one or more busbars are arranged on one side of the battery cell stack; a circuit board arranged on the busbar frame; and a busbar joint plate coupled to the busbar for electrically connecting the busbar and the circuit board.

The circuit board on the busbar frame may be formed of a flat plate.

### [Advantageous Effects]

The busbar joint plate and battery module according to an exemplary embodiment of the present invention can prevent damage to an FPCB through the busbar joint plate having a bent structure.

### [Description of Drawings]

FIG. 1 is a perspective view of a battery module according to an exemplary embodiment of the present invention.
FIG. 2 is an exploded perspective view of the battery module according to the exemplary embodiment of the present invention.
FIG. 3 is a perspective view of a battery cell in an exemplary embodiment of the present invention.
FIG. 4 is a perspective view of a terminal busbar in an exemplary embodiment of the present invention.
FIG. 5 is a perspective view of an insulating cover and an end plate in an exemplary embodiment of the present invention.
FIG. 6 is a front view of a busbar frame in an exemplary embodiment of the present invention.
FIG. 7 is a perspective view of the busbar frame in the exemplary embodiment of the present invention.
FIG. 8 is a diagram illustrating a busbar joint plate in an exemplary embodiment of the present invention.
FIG. 9 is a top view of the busbar joint plate placed on the busbar frame in an exemplary embodiment of the present invention.
FIG. 10 is a diagram illustrating an example in which a busbar joint plate according to a second exemplary embodiment is arranged horizontally.
FIG. 11 is a diagram illustrating an example in which the busbar joint plate according to the second exemplary embodiment is arranged vertically.
FIG. 12 is a perspective view of a busbar joint plate according to a third exemplary embodiment.
FIG. 13 is a top view of the busbar joint plate placed on the busbar frame in the third exemplary embodiment.
FIG. 14 is a diagram illustrating a battery pack in an exemplary embodiment of the present invention.
FIG. 15 is a diagram illustrating an automobile equipped with a battery pack according to an exemplary embodiment of the present invention.

### [Best Mode]

The advantages and features of the present invention, and a method for achieving the same will become apparent with reference to exemplary embodiments described in detail below together with the accompanying drawings. However, the present invention is not limited to the exemplary embodiments disclosed below, but can be implemented in a variety of different forms. The exemplary embodiments are provided to only complete the present invention and to allow one skilled in the art to which the present invention belongs to completely understand the category of the present invention. The present invention is only defined by the category of the claims. Thus, in some exemplary embodiments, well-known process steps, well-known device structures, and well-known technologies have not been specifically described in order to avoid obscuring the interpretation of the present invention. Like reference numbers designate like elements throughout the specification.

In the drawings, the thicknesses of layers and regions are exaggerated for clarity. Like reference numerals have been assigned to like elements throughout the specification. When an element such as a layer, a film, a region, a plate, or the like is referred to as being "on" another element, it may be "directly on" another element or an intervening element may also be present. In contrast, when an element is referred to as being "directly on" another element, there are no intervening elements present. In addition, when an element such as a layer, a film, a region, a plate, or the like is referred to as being "below" another element, it may be "directly below" another element or an intervening element may also be present. Conversely, when an element is referred to as being "directly below" another element, there are no intervening elements present.

A battery module 1000 according to an exemplary embodiment of the present invention will be described in detail with reference to the drawings.

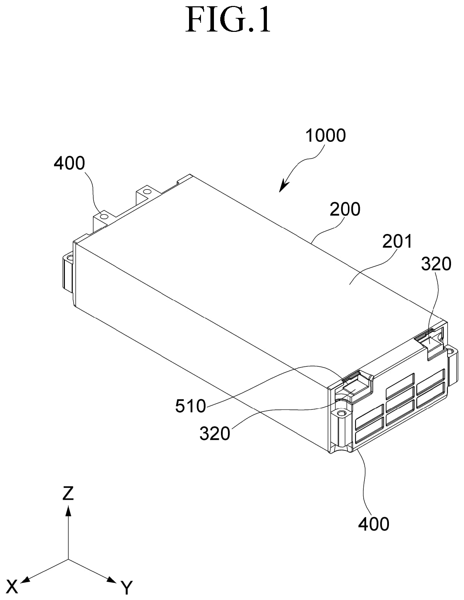

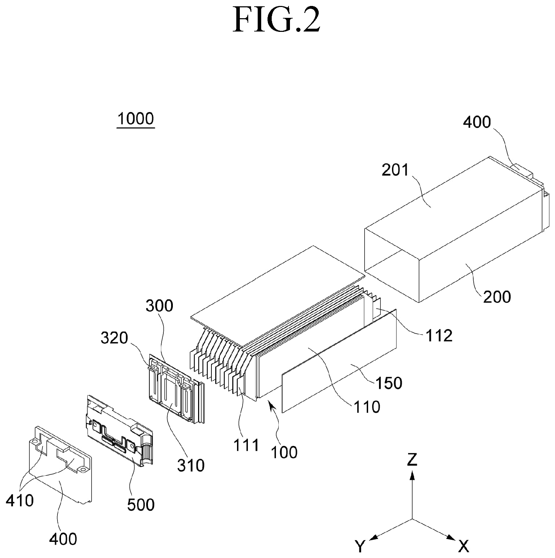

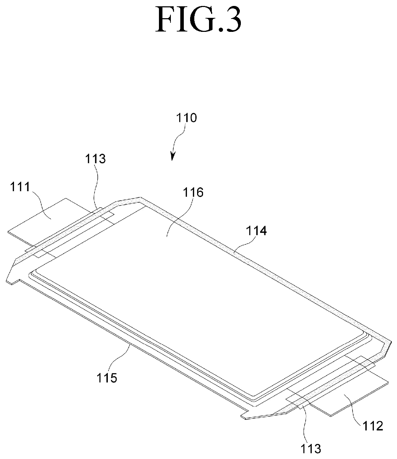

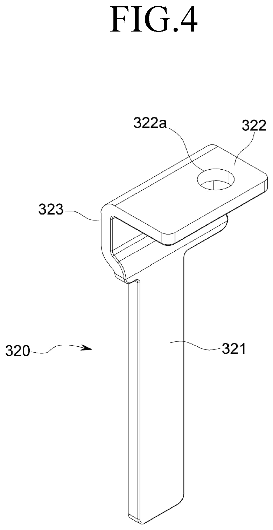

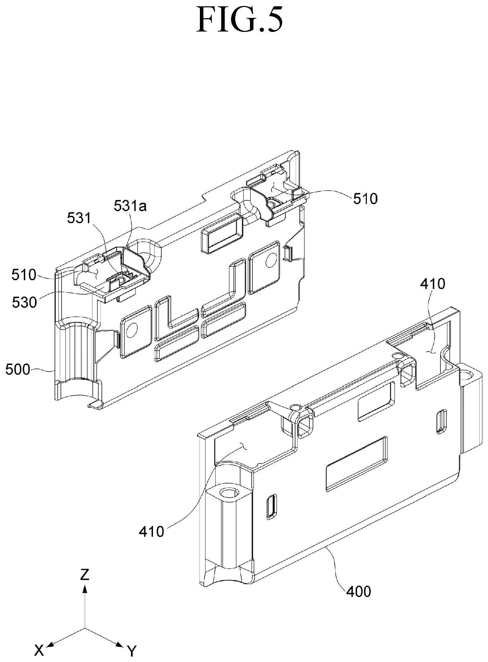

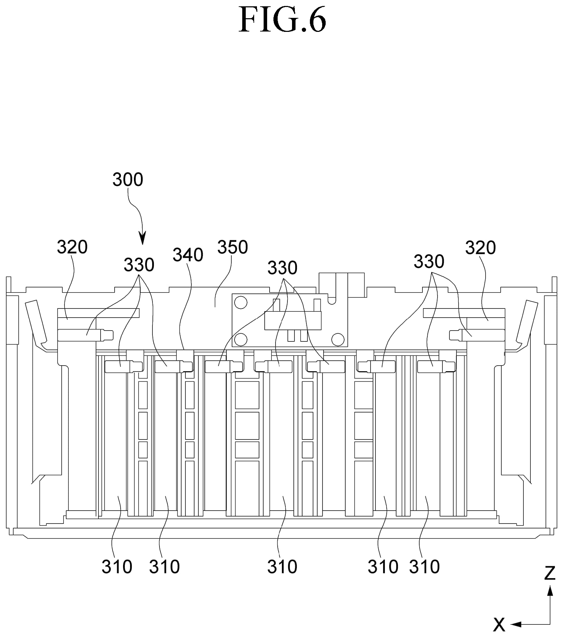

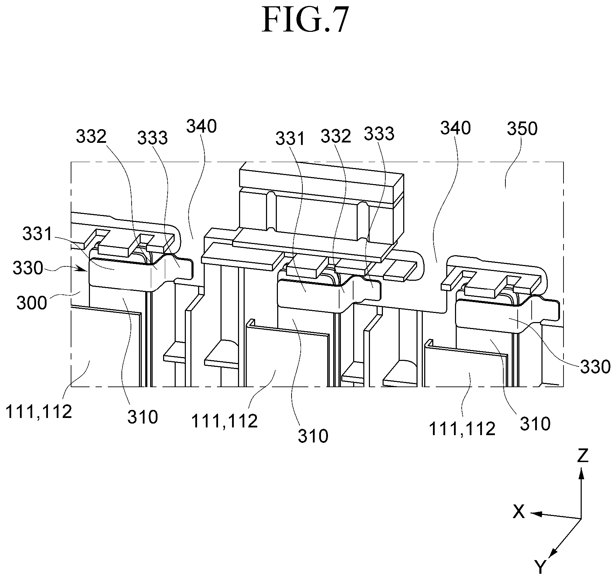

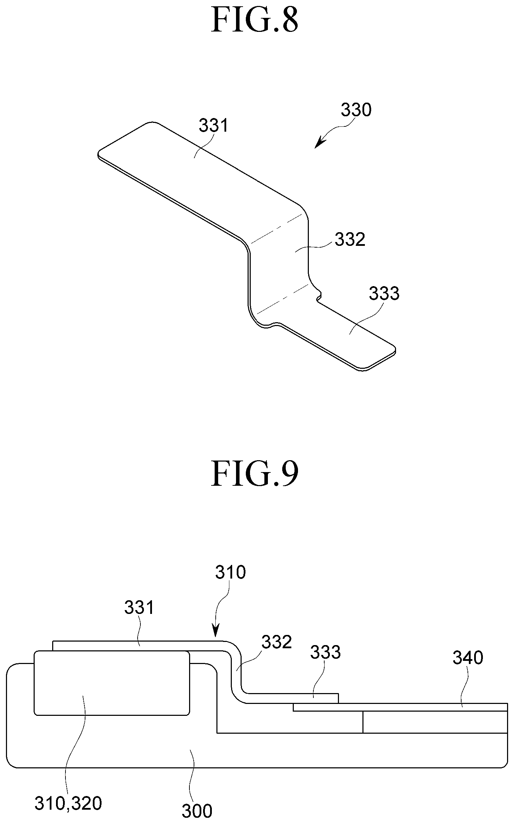

FIG. 1 is a perspective view of a battery module according to an exemplary embodiment of the present invention, FIG. 2 is an exploded perspective view of the battery module according to the exemplary embodiment of the present invention, FIG. 3 is a perspective view of a battery cell in an exemplary embodiment of the present invention, FIG. 4 is a perspective view of a terminal busbar in an exemplary embodiment of the present invention, FIG. 5 is a perspective view of an insulating cover and an end plate in an exemplary embodiment of the present invention, FIG. 6 is a front view of a busbar frame in an exemplary embodiment of the present invention, FIG. 7 is a perspective view of the busbar frame in the exemplary embodiment of the present invention, FIG. 8 is a diagram illustrating a busbar joint plate in an exemplary embodiment of the present invention, and FIG. 9 is a top view of the busbar joint plate placed on the busbar frame in an exemplary embodiment of the present invention.

A battery module 1000 according to an exemplary embodiment of the present invention may include a battery cell stack 100 in which a plurality of battery cells 110 are stacked, a module case 200 that accommodates the battery cell stack 100, a busbar frame 300 positioned on one surface and/or the other surface of the battery cell stack 100, an insulating cover 500 arranged on an outer side of the busbar frame 300, and an end plate 400 arranged on an outer side of the insulating cover 500.

The battery cell stack 100 may be composed of the plurality of battery cells 110 stacked in one direction, and the plurality of battery cells 110 may be electrically connected. The direction in which the plurality of battery cells 110 are stacked may correspond to the X-axis direction (or -X-axis direction) in FIG. 2.

A direction from a front surface toward a rear surface of the battery cell stack 100, or an opposite direction thereto, may be defined as a longitudinal direction of the battery cell stack 100, and may correspond to the Y-axis direction in the drawing. In addition, a direction from an upper surface toward a lower surface of the battery cell stack 100, or an opposite direction thereto, may be defined as a width direction of the battery cell stack 100, and may be the Z-axis direction in the drawing.

The longitudinal direction of the battery cell stack 100 may be substantially the same as the longitudinal direction of the battery cell 110. Electrode leads 111 and 112 of the battery cells 110 may be positioned on the front and rear surfaces of the battery cell stack 100, and busbars 310 and 320 of the battery module 1000 may be arranged close to the front and rear surfaces of the battery cell stack 100 so as to facilitate electrical connection with the electrode leads 111 and 112.

The battery cell 110 may be provided as a pouch-type battery cell, and the pouch-type battery cell may maximize the number of cells that are stacked per unit area. However, the battery cell 110 is not necessarily required to be provided as a pouch-type battery cell, and may instead be provided in prismatic, cylindrical, or various other forms.

The battery cell 110 provided in the form of a pouch-type battery cell may include an electrode assembly and a cell case 115 that accommodates the electrode assembly (see FIG. 3).

The cell case 115 of the battery cell 110 serves to accommodate the electrode assembly, and may be a pouch-type cell case 115. The cell case 115 may include a lower case and an upper case that covers the lower case, and the upper and lower cases may be formed integrally. In addition, as shown in FIG. 3, a connection portion between the upper and lower cases may be formed into a structure in which it is bent and folded. As shown, the upper case may completely cover the lower case and a sealing portion 114 may be formed at the periphery.

Each of the upper and lower cases may be composed of a laminate structure including an inner covering layer, a metal layer, and an outer covering layer. The inner covering layer is positioned on an inner side of the cell case 115 with respect to the metal layer, and is required to have insulating properties and resistance to an electrolyte because it comes into direct contact with the electrode assembly. Additionally, for sealing with the outside, sealability is required, i.e., a sealed portion formed by thermal bonding between the inner covering layers is required to exhibit excellent heat bonding strength. The metal layer is positioned between the inner and outer covering layers and acts as a barrier layer to prevent moisture or various gases from penetrating into the battery from the outside. A preferable material for the metal layer in contact with the inner covering layer may be an aluminum (Al) thin film that is lightweight and has excellent formability. The outer covering layer is positioned on an outer side of the cell case 115 with respect to the metal layer. For the outer covering layer, a heat-resistant polymer having excellent tensile strength, moisture impermeability, and air impermeability may be used in order to secure heat resistance and chemical resistance while protecting the electrode assembly. For example, nylon or polyethylene terephthalate may be used.

Each of the upper and lower cases may be formed with an accommodation groove 116, and an electrode assembly may be accommodated in the accommodation grooves 116 of the upper and lower cases.

The electrode assembly that is accommodated in the cell case 115 may be one selected from a group consisting of a jelly-roll type electrode assembly having a structure in which a separator is interposed between long sheet-like positive and negative electrodes and the resulting laminate is then wound, a stack-type electrode assembly including unit cells having a structure in which rectangular positive and negative electrodes are stacked with a separator interposed therebetween, a stack-and-folding type electrode assembly in which unit cells are wound using a long separator film, and a lamination-and-stack type electrode assembly in which unit cells are stacked with a separator interposed therebetween and attached to each other.

In addition, the electrode assembly may include two electrode tabs, and two electrode leads 111 and 112 respectively connected to the electrode tabs by welding.

One lead 111 or 112 of the two electrode leads 111 and 112 may be a positive electrode lead connected to a positive electrode tab, and the other electrode lead 111 or 112 may be a negative electrode lead connected to a negative electrode tab. As an example, the positive electrode lead 111 may be made of aluminum (Al), and the negative electrode lead 112 may be made of copper (Cu).

A lead film 113 may be attached to each of the electrode leads 111 and 112. The lead films 113 coupled to the electrode leads 111 and 112 are positioned between the electrode leads 111 and 112 and the cell case 115 to prevent a short circuit between the electrode leads 111 and 112 and the cell case 115 and to enhance sealing strength, thereby preventing leakage of the electrolyte or the like.

The two electrode leads 111 and 112 are shown as being arranged on both sides of the electrode assembly, respectively, but may instead be arranged on only one side of the electrode assembly, depending on the arrangement of the electrode tabs.

The module case 200 may serve to protect the battery cell stack 100 and electrical components connected to the battery cell stack from external physical impacts, and may accommodate the battery cell stack 100 and the electrical components in an internal space of the module case 200.

A structure of the module case 200 may vary, and may be, for example, a monoframe structure. Here, the monoframe may refer to a form of a metal plate with an upper surface, a lower surface, and both side surfaces formed integrally. The monoframe may be manufactured by extrusion molding. As another example, the module case 200 may have a structure in which a U-shaped frame and an upper plate (upper surface 201) are combined. In the case of a structure in which a U-shaped frame and an upper plate are combined, the structure of the module case 200 may be formed by combining an upper plate with an upper side of a U-shaped frame, which is a metal plate in which a lower surface and both side surfaces are combined or integrally formed, and each frame or plate may be manufactured by press forming. In addition, the structure of the module case 200 may be provided in the form of an L-shaped frame, in addition to the monoframe or U-shaped frame, and may also be provided in various other forms not described in the foregoing example.

The structure of the module case 200 may be provided in an open form in the longitudinal direction of the battery cell stack 100. The front and rear surfaces of the battery cell stack 100 may not be covered by the module case 200. The electrode leads 111 and 112 of the battery cells 110 may not be covered by the module case 200. The front and rear surfaces of the battery cell stack 100 may be covered by the busbar frames 300, end plates 400, busbars 310 and 320, and the like described below. With this arrangement, the front and rear surfaces of the battery cell stack 100 can be protected from external physical impacts and the like.

A compression pad 150 may be positioned between the battery cell stack 100 and one of inner surfaces of the module case 200.

The compression pad 150 may be arranged to face the outermost battery cell 110 of the battery cell stack 100 in the X-axis direction in the drawing.

In addition, although not shown, a thermally conductive resin may be injected between the battery cell stack 100 and an inner surface of the module case 200, and a thermally conductive resin layer (not shown) may be formed between the battery cell stack 100 and one inner surface of the module case 200 by the injected thermally conductive resin. In this case, the thermally conductive resin layer may be positioned on the Z-axis of the battery cell stack 100, and may be formed between the battery cell stack 100 and a bottom surface of the module case 200 positioned on the -Z-axis.

The busbar frame 300 is positioned on one surface of the battery cell stack 100, and may cover one surface of the battery cell stack 100 while simultaneously guiding connection between the battery cell stack 100 and an external device. Specifically, the busbar frame 300 may be positioned on the front or rear surface of the battery cell stack 100, as shown, or may also be positioned on the upper surface, lower surface, or side surface. At least one of the busbars 310 and 320 and a module connector may be mounted on the busbar frame 300. As shown in FIG. 2, one surface of the busbar frame 300 may be connected to one surface or the other surface of the battery cell stack 100, and the other surface of the busbar frame 300 may be connected to the busbars 310 and 320.

The busbar frame 300 may be made of, or include an electrically insulating material. The busbar frame 300 may restrict the busbars 310 and 320 from coming into contact with portions of the battery cells 110 other than portions where they are joined to the electrode leads 111 and 112, and may prevent an electrical short circuit.

The busbar frame 300 may be positioned on each of one side and other side of the battery cell stack 100.

FIG. 6 is a diagram illustrating the busbar frame 300 in an exemplary embodiment of the present invention. The busbars 310 and 320 may be mounted on one surface of the busbar frame 300, and the busbars 310 and 320 may be provided for electrically connecting the battery cell stack 100 or battery cells 110 and an external device circuit. The busbars 310 and 320 may be arranged in plural and protected from external impacts and the like by being positioned between the battery cell stack 100 or the busbar frame 300 and the end plate 400, and the deterioration in durability due to external moisture and the like may be minimized.

The busbars 310 and 320 may be electrically connected to the battery cell stack 100 via the electrode leads 111 and 112 of the battery cells 110.

Specifically, the electrode leads 111 and 112 of the battery cells 110 may be bent and connected to the busbars 310 and 320 after passing through lead slits formed in the busbar frame 300.

The busbars 310 may be provided for electrically connecting the battery cells, the electrode leads 111 and 112 of the battery cells 110 may be connected to both sides of the busbars 310, and the electrode lead 111 connected to one side of the busbar 310, 320 may be a positive electrode lead, and the electrode lead 112 connected to the other side of the busbar 310, 320 may be a negative electrode lead.

Then, a busbar joint plate 330 may be coupled to the busbar 310, 320. The busbar joint plate 330 may be connected to a circuit board (flexible printed circuit board; FPCB) 340 of a sensing portion (sensing plate) 350.

That is, the sensing portion 350 may be connected to the busbar 310, 320 via the busbar joint plate 330 coupled to the busbar 310, 320 to sense a voltage of the battery cell 110, and the like.

In the present exemplary embodiment, the circuit board (FPCB) 340 of the sensing portion 350 may be arranged on the busbar frame 300, and the circuit board 340 may be formed in a flat plate shape on the busbar frame 300.

In an exemplary embodiment of the present invention, the busbar joint plate 330 may be formed in a stepped shape as shown in FIG. 8.

Specifically, the busbar joint plate 330 may include a busbar coupling portion 331, a connection portion 332, and a board coupling portion 333, and as a whole, the busbar joint plate 330 may extend in the form of a thin plate along the width direction (X-axis direction or -X-axis direction) of the battery module 1000. The busbar joint plate 330 may extend in a direction orthogonal to the longitudinal direction (Z-axis direction) of the busbars 310 and 320.

The busbar coupling portion 331 is a portion of the busbar joint plate 330, which is coupled to the busbar 310, 320, may extend in the width direction (X-axis direction or -X-axis direction) of the battery module 1000, and may be joined to the busbar 310, 320 by welding or the like at an upper portion of the busbar 310, 320. The electrode lead 111, 112 of the battery cell 110 may be coupled to one surface (front surface) of the busbar 310, 320, and the busbar coupling portion 331 may be coupled to a portion where the electrode lead 111, 112 is not connected, on the same surface of the busbar 310, 320 to which the electrode lead 111, 112 is coupled. The busbar coupling portion 331 may extend rightward from the upper left side of the busbar 310, 320.

The connection portion 332 connects the busbar coupling portion 331 and the board connection portion 333 to each other between the busbar coupling portion 331 and the board connection portion 333.

The connection portion 332 may, with one end bent at the busbar coupling portion 331, extend inwardly of the battery module 1000 (in the direction of the battery cell 110) (Y-axis direction or -Y-axis direction). One end of the connection portion 332 may be bent at about 90 degrees at the busbar coupling portion 331. As shown in FIG. 7 and FIG. 9, the connection portion 332 may be bent at the right end of the busbar coupling portion 331 and arranged on a side surface of the busbar 310, 320.

The board coupling portion 333 is a portion of the busbar joint plate 330, which is connected to the circuit board (FPCB) 340. The board coupling portion 333 may, with one end bent at the connection portion 332, extend in the width direction (X-axis direction or -X-axis direction) of the battery module 1000 or in a direction of an adjacent busbar 310, 320.

In the busbar joint plate 330, the busbar coupling portion 331, the connection portion 332, and the board coupling portion 333 may be formed integrally and may be formed in a stepped shape. In the present exemplary embodiment, the busbar joint plate 330 may be made of a metal material such as aluminum or copper. Additionally, the busbar joint plate 330 may be made of the same material as the busbars 310 and 320. That is, if the busbars 310 and 320 are made of aluminum, the busbar joint plate 330 may also be made of aluminum, and if the busbars 310 and 320 are made of copper, the busbar joint plate 330 may also be made of copper.

As such, when the busbar joint plate 330 is made of the same material as the busbars 310 and 320, the two parts may be homogeneously joined by welding, and the weldability can be improved.

In the battery module 1000, the busbars 310 and 320 may not be arranged on the same plane as the circuit board (FPCB) 340.

That is, the busbars 310 and 320 may be arranged, protruding further than the circuit board (FPCB) 340 in the longitudinal direction (Y-axis direction or -Y-axis direction) of the battery module. In this case, a step section or a bent section may occur in the circuit board (FPCB) 340, and a crack may occur in the step section or bent section of the circuit board (FPCB) 340 during the assembly process, or the circuit board (FPCB) may be damaged due to an impact while a vehicle equipped with the battery module 1000 is traveling.

In the present exemplary embodiment, by applying a step configuration or a bent configuration to the busbar joint plate 330, the circuit board (FPCB) 340 can be configured as a flat plate without a bent section (step configuration) or the bent section can be minimized, thereby reducing the possibility of disconnection within the circuit board (FPCB) 340.

The battery cells 110 constituting the battery cell stack 100 may be connected in series or in parallel by the busbars 310 and 320.

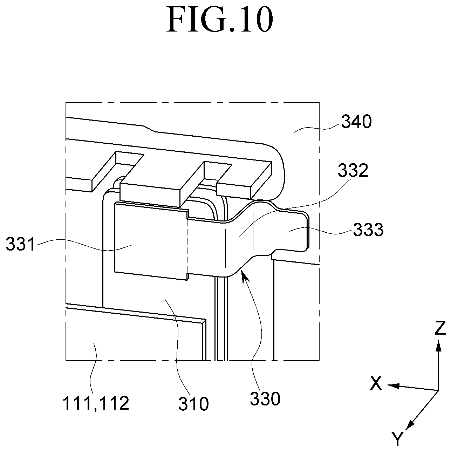

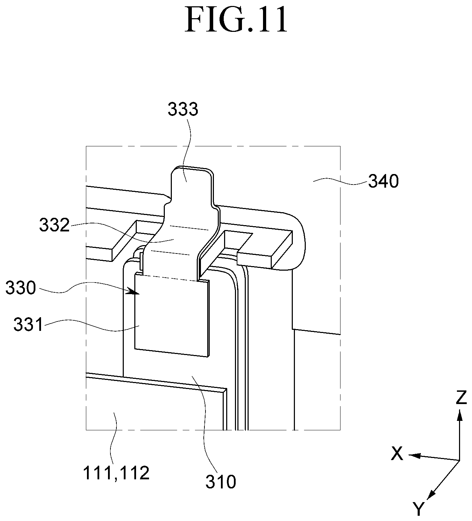

Note that FIGS. 10 and 11 show a busbar joint plate 330 according to a second exemplary embodiment of the present invention.

The difference between the busbar joint plate 330 according to the second exemplary embodiment and the first exemplary embodiment described above is that in the second exemplary embodiment, the busbar coupling portion 331 of the busbar joint plate 330 is formed in a square shape. The busbar joint plate 330 of the second exemplary embodiment may also include a busbar coupling portion 331, a connection portion 332, and a board coupling portion 333.

As such, in the second exemplary embodiment, the busbar coupling portion 331 of the busbar joint plate 330 is formed in a square shape, thereby allowing the direction of the busbar joint plate 330 to be changed from horizontal to vertical.

FIG. 10 illustrates an example in which the busbar joint plate 330 is arranged in the width direction (X-axis direction) of the busbar frame 300, and FIG. 11 illustrates an example in which the busbar joint plate 330 is arranged in the height direction (Z-axis direction) of the busbar frame 300. In FIG. 10, the connection portion 332 of the busbar joint plate 330 may be formed to cover a side surface of the busbar 310, 320, and in FIG. 11, the connection portion 332 of the busbar joint plate 330 may be formed to cover an upper surface of the busbar 310, 320.

The second exemplary embodiment has an advantage in that the direction of the busbar joint plate 330 can be changed to horizontal or vertical depending on the arrangement of the busbar 310, 320, the busbar frame 300, and the circuit board 340.

The other configurations and effects are the same as those in the first exemplary embodiment described above, so a detailed description thereof is omitted here.

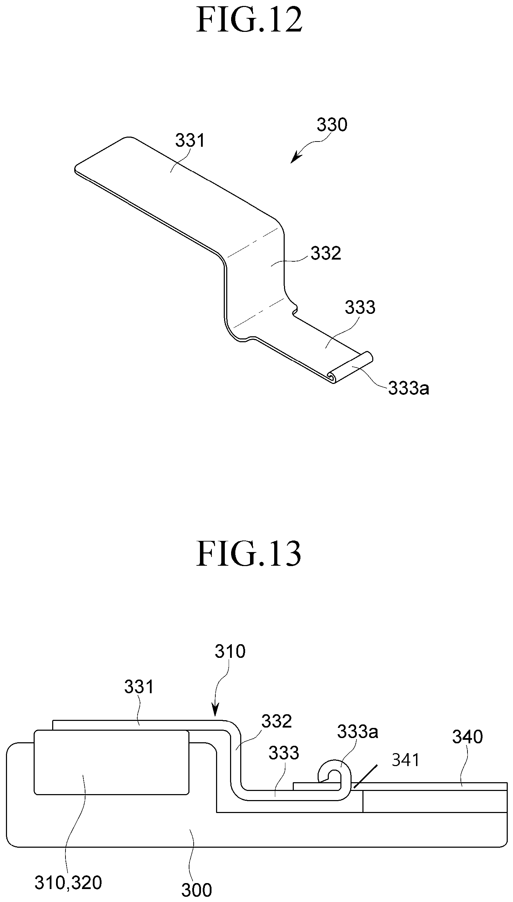

FIGS. 12 and 13 show a busbar joint plate 330 according to a third exemplary embodiment of the present invention.

The difference between the busbar joint plate 330 according to the third exemplary embodiment and the previous exemplary embodiments is that in the third exemplary embodiment, an end portion of the board coupling portion 333 of the busbar joint plate 330 may be bent toward the connection portion 332 and may be formed in a rolled shape toward the connection portion 332. The busbar joint plate 330 of the third exemplary embodiment may also include a busbar coupling portion 331, a connection portion 332, and a board coupling portion 333.

In the third exemplary embodiment, the board coupling portion 333 of the busbar joint 330 may have an end portion 333a bent toward the connection portion 332 or rolled toward the connection portion 332.

As shown in FIG. 13, the board coupling portion 333 may pass through a through-hole 341 of the circuit board 340. That is, the board coupling portion 333 may pass through the through-hole 341 from one surface of the circuit board 340 to the opposite surface, and the bent or rolled end portion 333a may come into contact with the circuit board 340 on the opposite surface of the circuit board 340.

In the third exemplary embodiment, the board coupling portion 333 may be inserted into the through-hole 341 of the circuit board 340, and the end portion 333a rolled toward the connection portion 332 may come into contact with the circuit board 340, thereby enabling a firmer coupling with the circuit board 340 and stable maintenance of the electrical connection. Additionally, the rigidity of the end portion 333a of the board coupling portion 333 can be enhanced.

The busbars 310 and 320 may include a terminal busbar 320 for electrically connecting one battery module 1000 to another battery module 1000.

At least a portion of the terminal busbar 320 may be exposed to the outside of the end plate 400 to be connected to another battery module 1000, and the end plate 400 may be provided with a terminal opening portion 410 for this purpose.

One end portion (second portion 322) of the terminal busbar 320 may be exposed through an opening portion 510 of the insulating cover 500 and the terminal opening portion 410 of the end plate 400.

As shown in FIG. 4, the terminal busbar 320 may include a first portion 321 connected to the electrode lead 111, 112 of the battery cell 110 and a second portion 322 exposed to the outside through the terminal opening portion 410. In addition, the terminal busbar 320 may further include a bent portion 323 formed between the first portion 321 and the second portion 322.

In the terminal busbar 320, the first portion 321 may be connected to the second portion 322 via the bent portion 323, and one surface of the first portion 321 and one surface of the second portion 322 may be perpendicular to each other. That is, by forming the bent portion 323 on the terminal busbar 320, the second portion 322 may protrude and be seated on a seating portion 530 of the insulating cover 500, and the second portion 322 may be electrically connected to a pack busbar (not shown). A coupling hole 322a is formed in the second portion 322 constituting one end portion of the terminal busbar 320, and the second portion 322 of the terminal busbar 320 is fixed by a fixing pin (not shown) inserted into the coupling hole 322a.

In the present exemplary embodiment, two terminal busbars 320 may be arranged on both sides of the busbar frame 300.

Of the two terminal busbars 320, one terminal busbar 320 may be a positive electrode (+) terminal busbar 320, and the other may be a negative electrode (-) terminal busbar 320.

In the present exemplary embodiment, the terminal busbar 320 on the left in FIG. 6 may be a positive electrode (+) terminal busbar 320 and may be made of aluminum (Al).

The positive electrode lead 111 made of aluminum may be joined to the left terminal busbar 320 made of aluminum. In this case, the homogeneous metal joining is achieved, thereby improving weldability.

In FIG. 4, the electrode lead 111 may be welded to the first portion 321 of the terminal busbar 320. The terminal busbar 320 may be nickel plated and tin plated.

In addition, the busbar joint plate 330 may be joined to the bent portion 323 of the terminal busbar 320. As described above, the sensing portion 350 may be connected to the busbar 320 via the busbar joint plate 330 coupled to the busbar 320 to sense a voltage of the battery cell 110, and the like. The busbar joint plate 330 of the exemplary embodiments described above can also be applied to the terminal busbar 320.

In the present exemplary embodiment, the busbar joint plate 330 made of aluminum may be coupled to the left terminal busbar 320 made of aluminum. Accordingly, homogeneous joining with the positive electrode terminal busbar 320 made of aluminum can be achieved by welding, thereby improving weldability.

The terminal busbar 320 on the right in FIG. 6 may be a negative electrode (-) terminal busbar 320 and may be made of copper (Cu).

The negative electrode lead 112 made of copper may be joined to the right terminal busbar 320 made of copper. In this case, the homogeneous metal joining is achieved, thereby improving weldability.

In addition, the busbar joint plate 330 may also be coupled to the right terminal busbar 320, and the busbar joint plate 330 made of copper may be homogeneously joined to the negative electrode terminal busbar 320 made of copper by welding, thereby improving weldability.

The end plate 400 may serve to protect the battery cell stack 100 and electrical components connected to the battery cell stack from external physical impacts by covering an open surface of the module case 200. To this end, the end plate 400 may be made of a material having a predetermined strength, and may include, for example, metal such as aluminum or a plastic material.

Terminal opening portions 410 may be formed in the end plate 400. The terminal opening portions 410 may be arranged on both sides of the end plate 400, respectively. A part of the insulating cover 500 and one end portion (second portion 322) of the terminal busbar 320 may be exposed through the terminal opening portion 410.

A connector opening portion may be positioned between the terminal opening portions 410 arranged on both sides of the end plate 400, and a module connector may be exposed to the outside through the connector opening portion.

The end plate 400 may be coupled to the module case 200 while covering the busbar frame 300 or busbars 310 and 320 located on one surface of the battery cell stack 100. Each corner of the end plate 400 may be coupled to a corresponding corner of the module case 200 by welding, bolting, hooking, or the like.

The end plates 400 may be positioned on one surface and the other surface of the module case 200 to cover both surfaces of the battery cell stack 100, respectively. In the present exemplary embodiment, an example in which the end plates 400 are positioned on the front and rear surfaces of the module case 200 is shown.

The insulating cover 500 may be arranged on an inner side of the end plate 400 and on an outer side of the busbar frame 300. In addition, the insulating cover 500 for electrical insulation may be arranged between the end plate 400 and the busbar frame 300. That is, the busbar frame 300, the insulation cover 500, and the end plate 400 may be sequentially positioned from the battery cell stack 100 toward the outside. As with the end plate 400, the busbar frame 300 and the insulating cover 500 may each be provided in plural.

The insulating cover 500 may be made of or may include an electrical insulating material, and may block the busbars 310 and 320 from coming into contact with the end plate 400.

The insulating cover 500 may include an opening portion 510 and a seating portion 530. The opening portion 510 may be arranged on each of both sides of an upper portion of the insulating cover 500, and one end portion (second portion 322) of the terminal busbar 320 may be exposed through the opening portion 510.

A connector opening portion may be positioned between the opening portions 510 positioned on both sides of the insulating cover 500, and a module connector may be exposed to the outside through the connector opening portion.

The insulating cover 500 may be positioned on an inner surface of the end plate 400, and may be in close contact with the inner surface of the end plate 400. However, no such limitation is intended.

As described above, one end portion (second portion 322) of the terminal busbar 320 may be exposed through the opening portion 510, and the exposed one end portion (second portion 322) of the terminal busbar 320 may be seated on the seating portion 530. Accordingly, the seating portion 530 may be arranged adjacent to the opening portion 510 and may be positioned on an upper outer surface.

The second portion 322 of the terminal busbar 320 may be seated on an upper surface of the seating portion 530, and thus the upper surface of the seating portion 530 may form a seating surface. Additionally, as shown in FIG. 5, the seating portion 530 may include a fixing member 531 for fixing the terminal busbar 320.

The fixing member 531 may fix the second portion 322 of the terminal busbar 320 and may include a fixing hole 531a.

A fixing pin (not shown) may be inserted into the fixing hole 531a. The fixing pin (not shown) inserted into the coupling hole 322a formed in the second portion 322 of the terminal busbar 320 is coupled and fixed to the fixing hole 531a, so that the second portion 322 of the terminal busbar 320 can be fixed to the insulating cover 500.

Accordingly, the second portion 322 of the terminal busbar 320 is seated on the seating portion 530 of the insulating cover 500, and the second portion 322 is seated on and comes into contact with the fixing member 531 arranged in the seating portion 530.

A terminal cover portion (not shown) that covers the exposed one end portion (second portion 322) of the terminal busbar 320 may be arranged on the insulating cover 500.

Note that electrical connection between the battery modules 1000 may be achieved through a pack busbar (not shown). The pack busbar is a member for connecting one battery module 1000 to another adjacent battery module 1000 or a battery disconnection unit (BDU), and may be connected to the exposed one end portion (second portion 322) of the terminal busbar 320. As an example, the pack busbar may be connected to an upper portion of one end portion (second portion 322) of the terminal busbar 320 so as to be overlapped therewith.

After one end of the pack busbar is arranged to overlap the second portion 322 of the terminal busbar 320, the fixing pin is sequentially inserted into the coupling hole of the pack busbar and the coupling hole 322a of the second portion 322 of the terminal busbar 320, and then the fixing pin is fixed to the fixing hole 531a of the seating portion 530, so that the pack busbar can be connected to the terminal busbar 320.

Then, the second portion 322 of the terminal busbar 320 may be fixed to the insulating cover 500 together with the pack busbar by the fixing pin.

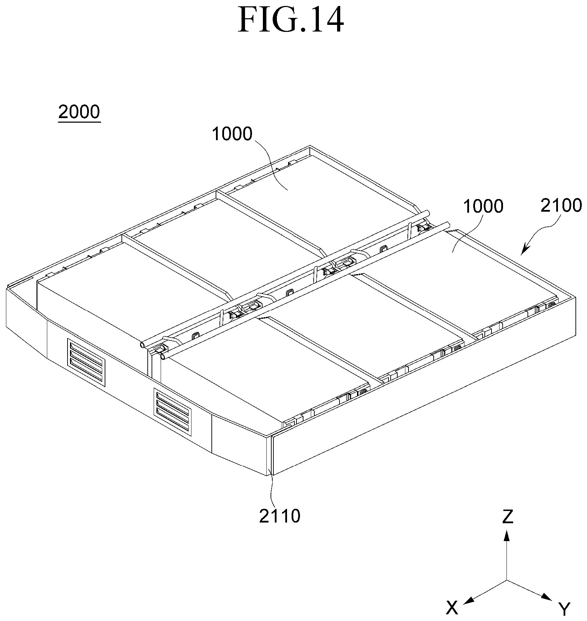

One or more battery modules 1000 according to the present invention as described above may form a battery pack 2000. As shown in FIG. 14, a battery pack 2000 according to an exemplary embodiment of the present invention may accommodate one or more battery modules 1000 inside a pack case 2100, and may include various control and protection systems, such as a battery management system (BMS) and a cooling system.

The pack case 2100 may include a lower housing 2110 and an upper housing (not shown) coupled to an upper side of the lower housing 2110, and a plurality of battery modules 1000 may be stored in an internal space of the lower housing 2110 and the upper housing.

Note that, in the exemplary embodiment of the present invention, an example in which the plurality of battery modules 1000 are accommodated inside the battery pack 2000 is shown; however, the plurality of battery cells 110 may be directly arranged inside the battery pack 2000.

The battery module 1000 and the battery pack 2000 according to the present invention configured in this manner may be applied to various devices. Specifically, they may be applied to transportation means such as electric bicycles, electric vehicles, and hybrid vehicles, or energy storage systems (ESS), but are not limited thereto and may be applied to various other devices that use secondary batteries.

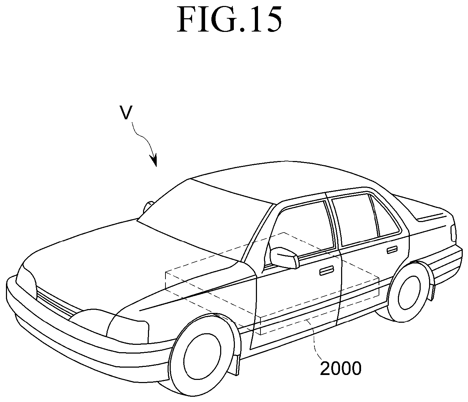

FIG. 15 shows an electric vehicle (V) equipped with the battery pack 2000. In the electric vehicle V, the wheels are driven by a motor that receives power from the battery pack 2000, thereby enabling the electric vehicle to travel.

Although the present invention has been described with reference to preferred exemplary embodiments as described above, it is not limited to the above-described exemplary embodiments, and various changes and modifications can be made by one skilled in the art to which the present invention belongs without departing from the spirit of the present invention.

### [Industrial Applicability]

The present invention can provide a busbar joint plate having a bent structure capable of preventing damage to an FPCB, and a battery module including the same.

## Claims

1. A busbar joint plate for a battery module, the busbar joint plate being coupled to a busbar for connecting the busbar and a circuit board, the busbar being provided for electrical connection of a plurality of battery cells in the battery module comprising the plurality of battery cells, the busbar joint plate comprising:
a busbar coupling portion coupled to the busbar;
a board coupling portion connected to the circuit board; and
a connection portion between the busbar coupling portion and the board coupling portion.

2. The busbar joint plate of claim 1, wherein the busbar coupling portion, the board coupling portion, and the connection portion are formed integrally.

3. The busbar joint plate of claim 1, wherein the busbar joint plate is formed in a stepped shape.

4. The busbar joint plate of claim 1, wherein the busbar coupling portion is arranged on an outer side of the battery module with respect to the board coupling portion.

5. The busbar joint plate of claim 1, wherein the connection portion, with one end bent at the busbar coupling portion, extends inwardly of the battery module.

6. The busbar joint plate of claim 5, wherein the board coupling portion, with one end bent at the connection portion, extends in a width direction of the battery module.

7. The busbar joint plate of claim 1, wherein the busbar joint plate is made of the same material as the busbar.

8. The busbar joint plate of claim 1, wherein the busbar coupling portion is formed in a square shape.

9. The busbar joint plate of claim 1, wherein the board coupling portion has a rolled end portion.

10. A battery module comprising:
a battery cell stack in which a plurality of battery cells are stacked;
a module case configured to accommodate the battery cell stack;
a busbar configured to electrically connect the battery cells;
a busbar frame on which one or more busbars are arranged on one side of the battery cell stack;
a circuit board arranged on the busbar frame; and
a busbar joint plate coupled to the busbar for electrically connecting the busbar and the circuit board.

11. The battery module of claim 10, wherein the busbar joint plate comprises
a busbar coupling portion coupled to the busbar;
a board coupling portion connected to the circuit board; and
a connection portion between the busbar coupling portion and the board coupling portion.

12. The battery module of claim 10, wherein the busbar coupling portion, the board coupling portion, and the connection portion are formed integrally.

13. The battery module of claim 11, wherein the busbar joint plate is formed in a stepped shape.

14. The battery module of claim 11, wherein the busbar coupling portion is arranged on an outer side of the battery module with respect to the board coupling portion.

15. The battery module of claim 11, wherein the busbar coupling portion is formed in a square shape.

16. The battery module of claim 11, wherein the board coupling portion has an end portion rolled in a direction of the connection portion.

17. The battery module of claim 11, wherein the connection portion, with one end bent at the busbar coupling portion, extends inwardly of the battery module.

18. The battery module of claim 17, wherein the board coupling portion, with one end bent at the connection portion, extends in a width direction of the battery module.

19. The battery module of claim 10, wherein the busbar joint plate is made of the same material as the busbar.

20. The battery module of claim 10, wherein the circuit board on the busbar frame is formed of a flat plate.
